# EUROPEAN PATENT APPLICATION

(11) **EP 4 336 218 A1**
(43) Date of publication of application: **13.03.2024**
(21) Application number: 22306324.9
(22) Date of filing: 07.09.2022
(51) Int. Cl.: G01S 13/931, G01S 7/03, G01S 13/87, H04B 1/403

(54) **CASCADED RADAR SYSTEM WITH IMPROVED AVAILABILITY**

(71) Applicant: NXP B.V., 5656 AG Eindhoven (NL)
(72) Inventor: PAVAO MOREIRA, Cristian, 31023 Cedex 1 Toulouse (FR); MESNARD, Thierry, 31023 Cedex 1 Toulouse (FR); BARRILADO GONZALEZ, Andres, 31023 Cedex 1 Toulouse (FR); BOULKHEIR, Mohamed, 31023 Cedex 1 Toulouse (FR); SALLE, Didier, 31023 Cedex 1 Toulouse (FR)
(74) Representative: Schmütz, Christian Klaus Johannes

(57) **Abstract**

A system and method for a radar system are provided. The radar system includes a leader radar device that includes a first clock generation circuit configured to generate a first clock signal, and a first transmitter and receiver configured to transmit and receive radar signals using a first local oscillator signal. The system includes a follower radar device. The follower radar device is configured to receive the first clock signal and the first local oscillator signal from the leader radar device. The follower radar device includes a second clock generation circuit configured to generate a second clock signal, wherein, in a default operational mode of the radar system at least a portion of the second clock generation circuit is disabled, and a second transmitter and receiver configured to transmit and receive first radar signals.

## Description

### TECHNICAL FIELD

The present disclosure is directed in general to radar systems and associated methods of operation. In one aspect, the present disclosure relates to an automotive radar system that includes multiple radar transmitter and receiver devices and that is configured with redundant timing components to provide redundancy and continuous radar system operations in the event of a timing component or transmitter and receiver device failure.

### BACKGROUND

A radar system transmits an electromagnetic signal and receives back reflections of the transmitted signal. The time delay and/or time delay variation between the transmitted and received signals can be determined and used to calculate the distance and/or the speed of objects causing the reflections, respectively. For example, in automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms. Although many different types and configurations of radar systems exist, many automotive applications utilize cascaded topologies that utilize several radar transmitter/receiver devices or subsystems that each transmit and receive separate radar signals to provide high resolution radar imaging. Those radar systems include a primary 'leader' radar device and a number of 'follower' devices. Control timing signals, such as clock signals, local oscillator signals, and other synchronization signals and commands are distributed by the leader radar device to the follower radar devices in order to maintain synchronicity and phase coherence between the radar signals being transmitted by each of the leader and follower radar devices, thereby enabling improved radar signal processing accuracy.

In these systems, it is typical that synchronization is controlled by a number of control timing signals (e.g., generated by the leader radar device based upon an input received from an external oscillating crystal (XTAL)), with the control signals being distributed by the leader radar device to the follower radar devices. Although this approach allows for higher-resolution radar imaging, any failure in the single XTAL component or other control signal generating components of the leader radar device will compromise the operations of the complete cascaded radar system.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a block diagram depicting functional components of an automotive radar system with components arranged in a cascade topology.
FIG. 2 is a block diagram of a cascaded radar topology in which a single crystal oscillator is used to generate a clock signal that is distributed between a leader radar device and a follower radar device.
FIG. 3 is a block diagram of a cascaded radar system that includes the radar system of FIG. 2 modified in accordance with the present disclosure to provide redundant operation.
FIG. 4 depicts a block diagram of a radar system having a cascade leader-follower topology in which a second crystal oscillator is connected to the follower radar device to enable redundant operation.
FIG. 5 is a flow chart depicting a method that may be executed by a radar system central processor to implement fail-over in the event of a failure of a leader radar device.
FIG. 6 is a functional block diagram depicting the cascaded radar system of FIG. 3 modified to create a cascade radar system that enables the follower radar device to transmit a clock signal to the leader radar device in the event of a failure of the clock generation components of the leader radar device.
FIG. 7 depicts a block diagram of a radar system having a cascade leader-follower architecture in which the follower radar device is configured to transmit a clock signal to the leader radar device in the event that a clock signal generation component of the leader radar device experiences a failure.
FIG. 8 is a flow chart depicting a method that may be executed by a radar system processor to implement fail-over in the event of a failure of a leader radar device.
FIG. 9 is a block diagram depicting an embodiment of a radar system that is configured to enable a follower radar device to distribute an LO signal to a leader radar device.

### DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

Conventional cascaded automotive radar systems rely on a single external crystal oscillator (XTAL) to provide clocking signals that enable synchronization between a leader radar device and various follower radar devices. Although this cascaded arrangement can enable increased resolution of radar imaging operations, it can present a single point of failure in which a failure or error in the radar system's single XTAL (or another portion of the radar system's synchronization subsystem) can cause radar system operations to be compromised.

To mitigate this problem, the present disclosure provides a cascaded radar topology in which multiple redundant timing and synchronization subsystems are provided to enable continuous operation of the radar system even in the event of a timing and synchronization subsystem failure in the leader radar device. In an embodiment, separate XTAL devices are provided for each of the leader radar device and the follower radar devices. During normal operations, the XTAL coupled to the leader radar device is the clock input and enables synchronization signal generation in the leader radar device. However, if the XTAL coupled to the leader radar device should fail, one of the follower radar devices will become the leader radar device and use its own redundant XTAL to generate clock and synchronization signals that may be utilized for ongoing radar system operations.

In various embodiments, the internal radar device IC circuitry is duplicated across leader and follow radar devices so that in addition to redundant XTAL components, circuits, such as chirp generators and local oscillator components, may be duplicated across individual radar devices providing further redundancy to the operation of those components.

In the context of the present disclosure, it will be appreciated that radar systems may be used as sensors in a variety of different applications, including but not limited to automotive radar sensors for road safety and vehicle control systems, such as advanced driver-assistance systems (ADAS) and autonomous driving (AD) systems.

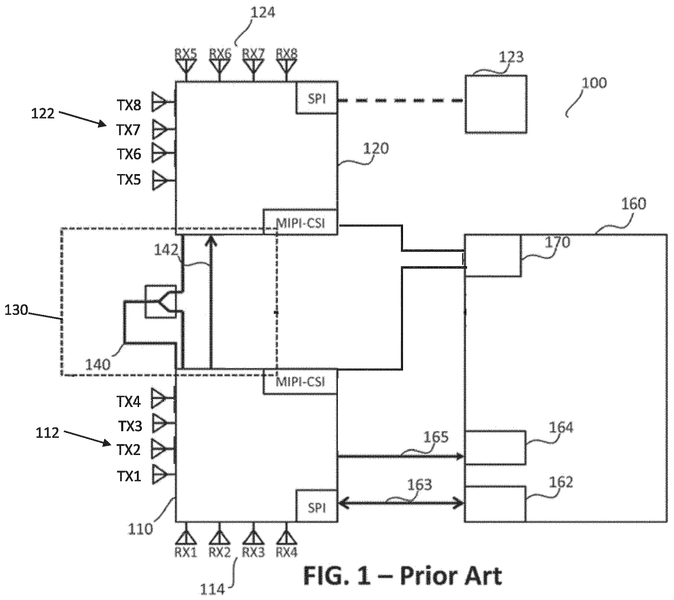

FIG. 1 is a block diagram depicting functional components of an automotive radar system 100 with components arranged in a cascaded topology. In the depicted automotive radar system 100, the radar system cascades two radar devices. One of the two radar devices is defined as the leader radar device 110, which contains a first set of transmitter circuits coupled to transmit antennas 112 and a first set of receiver circuits coupled to receive antennas 114. The leader radar device 110 provides a number of signals 130 to one or more follower radar device 120. In this way, leader radar device 110 leader and several follower radar devices (e.g., follower radar device 120) are cascaded coherently to increase the number of transmit and receive channels, thereby enabling an increase in radar system sensor accuracy and resolution.

Each leader radar device 110 and follower radar device 120 embeds several receiver and transmitter channels, and a digit unit 160 that may operate as a simple digital controller, or more be implemented by a digital processor configured to combine data from all receivers, as well as to control and program the leader radar device 110 and follower radar device 120. The leader radar device 110 is arranged to distribute a local oscillator (LO) signal 140 off-chip through transmission lines on a substrate (e.g., printed circuit board (PCB)) to which the components of depicted automotive radar system 100 are mounted to other system components (in this case the one other follower radar device 120.

Local oscillator (LO) signal 140 is used by the different transmitters and receivers to ensure that the downconverters in each receiver are at the same phase. Signal 140 is typically star-routed (i.e., routed via transmission lines have equal length) to each radar device (e.g., leader radar device 110 and follower radar device 120) to provide the same delay and precise phase coherence between all such radar devices. The follower radar device 120 (and further follower radar devices 123) contains a second set of transmitter circuits coupled to transmit antennas 122 and a second set of receiver circuits coupled to receive antennas 124.

The distribution of the LO signal 140 from the leader radar device 110 ensures that the follower radar device 120 is also able to use the LO signal 140, and thereby ensure that the transmitting signal frequency and the LO frequency of the down conversion mixer (in RX blocks) of different radar ICs are the same. The LO signal 140 is used by all devices (including the leader radar device 110 wherein the LO signal 140 is routed out of the leader radar device 110 and thereafter back into the leader radar device 110. Typically, in cascade configuration, the LO signal 140 is routed with symmetrical PCB transmission line lengths in order to ensure that all receivers (encompassing a respective down mixer) in each leader radar device 110 and follower radar devices 120, 123 of depicted automotive radar system 100 receive the same LO signal with same phase. Phase coherence is important for cascaded systems. Other control signals may be synchronized with a lower speed clock, for example an analog-to-digital converter (ADC) clock, which may be used across multiple ICs/devices.

Leader radar device 110 is coupled to the digital unit 160. Digital unit 160 includes various interfaces, such as a serial-parallel interface (SPI) 162, a general-purpose data inputoutput port 170, and controller clock interface 164, this clock signal 165 generally provided by the leader radar device 110.

Clock signal 142 is generated by leader radar device 110 and used as a time base for synchronization of the operations of leader radar device 110 and follower radar device 120 (and any other follower radar devices 123). The connection to the controller 160 consists of SPI control lines 163 and digital data line signals from leader radar device 110 and follower radar device 120 back to the controller 160 for later signal processing, in a given data format (e.g., Mobile Industry Processor Interface Camera Serial Interface (MIPI CSI-2), low voltage differential signaling (LVDS) or other formats).

The cascading clock signals transmitted between leader radar device 110 and follower radar device 120 are used for time-based synchronization of the sampling moments on the radar signal processing systems of the leader and follower radar devices. For optimal operation of distributed radar systems, it is important that these various signals (LO 140 and clock signal 142) are synchronous across all receiver circuits on different radar devices.

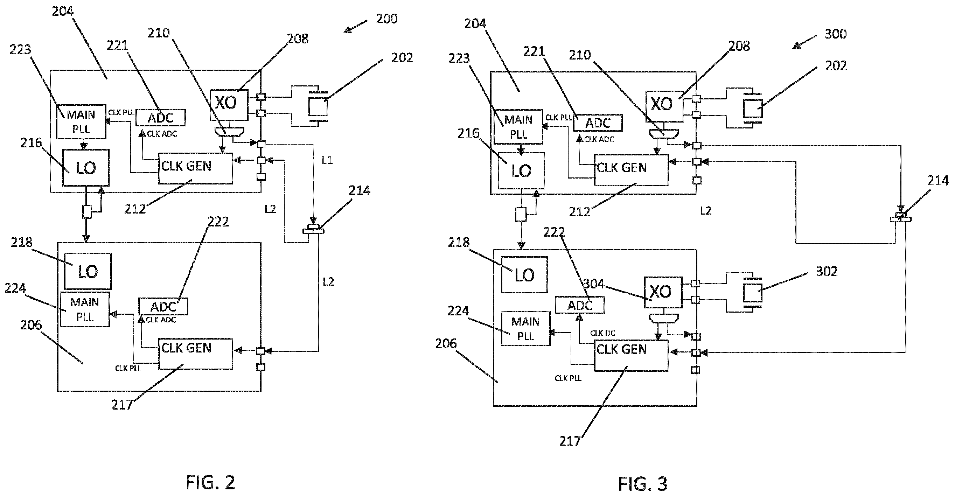

FIG. 2 is a simplified block diagram of a cascaded radar system 200 in which a single crystal oscillator (XTAL) 202 is used to generate a clock signal that is distributed between a leader radar device 204 (e.g., leader radar IC 110 of FIG. 1) and a follower radar device 206 (e.g., follower radar IC 120 of FIG. 1).

XTAL 202 is an electronic circuit that uses a piezoelectric crystal to generate an output signal with a predictable and precise output frequency. In various embodiments of autonomous radar systems, XTAL 202 may include a Quartz or other type of resonator adapted for automotive applications constraints (e.g., configured for operation in ambient temperatures ranging from -40 °C to 150 °C, at least) and presenting low phase noise.

XTAL 202 is connected to leader radar device 204 so that the output signal of XTAL 202 is supplied to crystal-controlled clock oscillator (XO) circuit 208 of leader radar device 204. Based on the signal received from XTAL 202, XO circuit 208 generates a signal at a desired frequency that is output by XO circuit 208 through a multiplexer (mux) 210 to both clock generation circuit 212 and external splitter 214.

External Splitter 214 splits the clock signal into two separate signals with the same frequency and equal phase and supplies a first one of the two signals back to clock generation circuit 212 via a first routing path and a second one of the two signals to clock generation circuit 217 of follower radar device 206 via a second routing path. The two routing paths are of the same electrical length (i.e., the two paths are of the same length in terms of the phase shift introduced by transmission of a signal over the path at some frequency) to provide that the two signals reach clock generation circuit 212 and clock generation circuit 217 with the same delay and phase.

Clock generation circuit 212 of leader radar device 204 is configured to process the clock signal received directly from XO circuit 208 and the clock signal received from splitter 214 to generate clock signal inputs to various radar IC components such as ADC 221 and Main PLL 223. Main PLL 223 supplies an input signal to LO circuit 216. From the modulated signal received from MainPLL (modulated since frequency is varying over time, as the signal comprises a frequency-modulated continuous-wave (FMCW) chirp at MainPLL 223 output) the LO circuit 216 generates a frequency varying reference LO signal that is transmitted to the LO circuit 218 of follower radar device 206. The LO signals are used to generate the high frequency RF signals that are ultimately transmitted by leader radar device 204 and follower radar device 206 as part of the operation of cascaded radar system 200. The LO signals are also used by receiver circuitry in each of leader radar device 204 and follower radar device 206 for processing and decoding of radar signals received by each of leader radar device 204 and follower radar device 206. Clock generation circuit 217 of follower radar device 206, in a similar manner to clock generation circuit 212 of leader radar device 204, is configured to process the clock signal received from XO circuit 208 to generate appropriate clock signal inputs to various radar IC components such as ADC 222 and Main PLL 224.

In the cascaded radar system 200 configuration depicted in FIG. 2, therefore, it is apparent that XTAL 202 is a necessary component for the proper operation of both leader radar device 204 and follower radar device 206. If XTAL 202 should fail, the clock generation circuit 212 of leader radar device 204 would become inoperative, inhibiting proper operation of leader radar device 204. Furthermore, in the event of such a failure, the clock signal generated by XO circuit 208 is not properly provided to clock generation circuit 217 of follower radar device 206 and the LO signal will no longer be supplied to LO circuit 218, as the MainPLL 223 will not operate since no clock input is available. As such, follower radar device 206 will be unable to operate correctly and cascaded radar system 200 would no longer function.

To mitigate this single point of failure, the present disclosure provides a cascade radar system topology in which a redundant or backup XTAL circuit is provided (see, for example, cascaded radar system 300 of FIG. 3). This arrangement can provide that in the event of failure of the XTAL or clock generation circuitry associated with the leader radar device, the follower radar device may continue operation using its own XTAL for control signal clock generation, MainPLL and LO signal, When operating in this fail-over mode, the resolution of the radar system may be somewhat degraded because the leader radar device is no longer operational, but the follower radar device will at least be operational enabling the radar system to continue operating, even if in a degraded fashion.

FIG. 3 is a block diagram of a cascade radar system 300 that includes the radar system of FIG. 2 modified in accordance with the present disclosure to provide redundant operation. Components in FIG. 3 that have the same reference number as those shown in FIG. 2 are functionally equivalent.

With reference to FIG. 3, XTAL 302 is provided. XTAL 302 is connected to XO circuit 304 of follower radar device 206. During normal operation of cascade radar system 300, XTAL 302 is not operational and instead the timing operations of cascade radar system 300 are controlled by XTAL 202 in the manner described with respect to FIG. 2. However, in the event of a failure in the clock and timing system of leader radar device 204 or XTAL 202, XTAL 302 becomes operational to supply a timing control signal to follower radar device 206 enabling ongoing operation of follower radar device 206. To enable this redundancy, follower radar device 206 includes its own XO circuit 304, which is configured to perform the same or similar functions to the XO circuit 208 of leader radar device 204. Again, during normal operations of cascade radar system 300, XO circuit 304 is not operational because the clock signals utilized by follower radar device 206 are provided by leader radar device 204. However, in the event of a failure in the clock timing synchronization system of leader radar device 204 (e.g., a failure in one or more of XTAL 202, XO circuit 208, main PLL223, clock generation circuit 212, LO circuit 216, splitter 214, and the like) such that follower radar device 206 must generate its own clock and timing signals, XTAL 302 and XO circuit 304 of follower radar device 206 becomes operational, and follower radar device 206 relies upon XTAL 302, XO circuit 304, and main PLL224 to generate alternative clock signals required for operation. In this case, leader radar device 204 can be affirmatively disabled so that follower radar device 206 is the only radar device operating within cascade radar system 300.

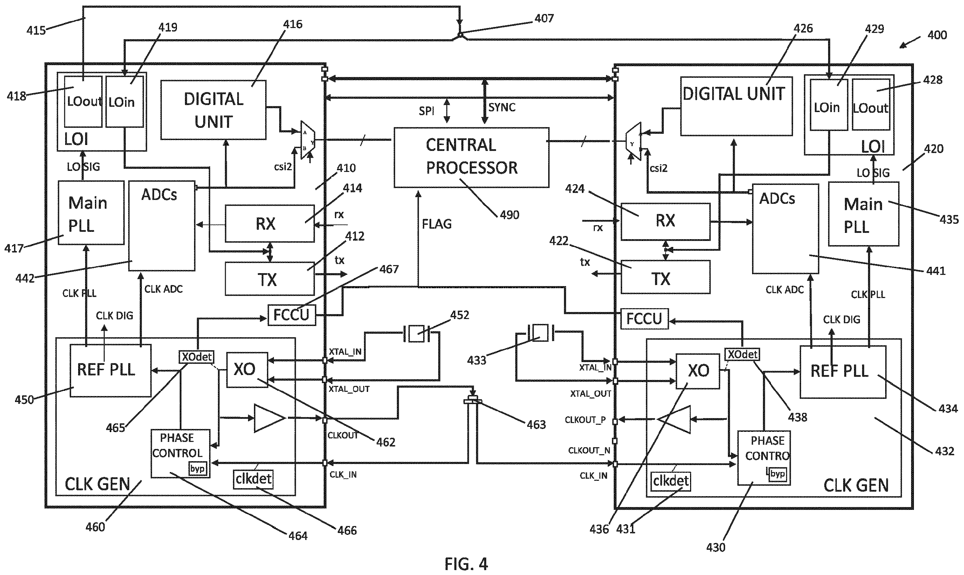

In more detail, FIG. 4 depicts an example block diagram of a radar system 400 having a cascade leader-follower arrangement in which a second XTAL is connected to the follower radar device to enable redundant operation in the event of a leader radar device failure. In this example, radar system 400 includes a leader radar device 410 and one or multiple follower radar devices 420. One follower radar device 420 is shown in FIG. 4 for clarity purposes only, with the potential for other similar follower radar devices being implemented within radar system 400.

Leader radar device 410 and follower radar device 420 are often implemented using the same circuitry. Alternatively, the circuit and/or component examples depicted may be implemented as any number of separate integrated circuits, such that the functional components of leader radar device 410 and follower radar device 420 can be incorporated into multiple separate ICs that are interconnected with one other in a suitable manner.

Leader radar device 410 incorporates a radar transceiver formed by at least a frequency generation circuit, which in this example includes a reference phase locked loop (PLL) 450 and a main PLL 417. Main PLL 417 is configured to generate chirp signals used in constructing transmitted radar signals and for the down conversion of received radar signals.

An output from the main PLL 417 includes an LO signal that is transmitted to an LO interface that includes an LO output port 418 and an LO input port 419. The LO signal 417b received from PLL 417 is output by LO output port 418 through LO output path 415. LO output path 415 is connected to RF splitter 407 that splits the LO signal into two separate in-phase signals of equal power and transmits the split LO signals to LO inputs 419, 429 at each of leader radar device 410 and follower leader radar device 420 via an equal transmission line length (e.g., via a star configuration). By using equal transmission line lengths, it is possible to provide equally delayed and phase aligned signals for the LO signal received at each of leader radar device 410 and follower radar device 420.

Leader radar device 410 includes an optional digital controller 416 and a transmitter circuit 412 comprising one to several transmitter channels (TX_CH) and a receiver circuit 414 comprising one to several receiver channels (RX CH). Similarly, follower radar device 420 includes an optional digital unit 426 and a transmitter circuit 422 comprising one to several transmitter channels (TX CH) and a receiver circuit 424 comprising one to several receiver channels (RX CH).

In a transmitter mode of operation of radar system 400, digital unit 416 in leader radar device 410 may cause a modulated transmit signal to be passed to transmitter circuits 412, 422 of the respective leader radar device 410 and follower radar device 420. Corresponding high-frequency outputs of the transmitter circuits 412, 422 are passed to power amplifiers (e.g., via a phase shifter circuit) (both not shown), where the signals are amplified within the respective transmitter circuits 412, 422 and routed to the one or more transmitter antenna(e) (not shown).

In a receiver mode of operation of cascade radar system 400, a received radar signal may be received at the one or more receiver antenna(s) and passed to leader and follower receiver circuits 414, 424 that include a low noise amplifier (LNA) configured to amplify the received radar signal. The amplified received radar signal is mixed down with the received high frequency LO signal received by leader radar device 410 and follower radar device 420 at respective LO input ports 419, 429.

To further process received radar signals, leader radar device 410 includes one or more programmable bandpass filter(s) and one or more gain amplifiers (not shown), as well as one or several analog-to-digital converters 442 that is/are coupled to receiver circuit 414. Similarly, follower radar device 420 includes one or more programmable bandpass filter(s) and one or more gain amplifiers (not shown), as well as one or several analog-to-digital converters 441 that is/are coupled to receiver circuit 424.

Leader radar device 410 includes a clock distribution and synchronization circuit 460. In this example, reference clock signals are generated by XO circuit 462 using an input signal XTAL_IN received from XTAL 452. The clock signal CLKOUT generated by XO circuit 462 is transmitted to splitter 463 that distributes the clock signal back to clock phase controller 464 of leader radar device 410. In this embodiment, follower radar device 420 also includes clock phase controller 430. The clock signal output by XO circuit 462 is also transmitted by splitter 463 to clock phase controller 430. In this embodiment, each of clock phase controller 464, 430 include bypass functionality enabling either of clock phase controller 464, 430 to be selectively activated or bypassed, where clock phase controllers 464, 430 are bypassed when the phases of their respective input signals are equal to the phases of their respective input signals.

Clock distribution and synchronization circuit 460 includes XO operation detection circuit 465, which is configured to determine whether XO circuit 462 is properly generating an output clock signal, and clock detection circuit 466, which is configured to confirm that the clock signal CLKOUT is being properly received at clock phase controller 464. If either XO operation detection circuit 465 or clock detection circuit 466 determine that XO circuit 462 has malfunctioned or that the clock signal CLKOUT is not properly being received, either component can generate an error flag that is transmitted to fault collection and control circuit 467.

Follower radar device 420 includes an optional digital unit 426 and a transmitter circuit 422 comprising one to several transmitter channels (TX CH) and a receiver circuit 424 comprising one to several receiver channels (RX CH). The follower radar device 420 further includes one or several ADC(s) 441 that is/are coupled to the one to several receiver channels (RX CH) 424.

In the present embodiment, follower radar device 420 may be configurable to operate as a leader radar device in case of leader radar device 410 malfunction. Accordingly, follower radar device 420 may include the same functional components as leader radar device 410, however, during normal operations of radar system 400 those components may be disabled. For example, the LO interface (LOI) of follower radar device 420 includes LO output 428, which during normal operations is not operational. Additionally, follower radar device 420 includes a clock input of synchronization circuit 432 that includes a reference PLL 434 configured, during normal operations, to receive the clock signal CLKOUT from XO circuit 462 of leader radar device 410.

Synchronization circuit 432 further includes XO circuit 436 (that provides the same functionality as XO circuit 462), clock phase controller 430 (that provides the same functionality as clock phase controller 464), XO operation detection circuit 438 (that provides the same functionality as XO operation detection circuit 465), and clock detection circuit 431 (that provides the same functionality as clock detection circuit 466). XO circuit 436 of synchronization circuit 432 is connected to XTAL 433. XTAL 433 may provide the same functionality and be of similar physical configuration to XTAL 452. Reference PLL 434 is connected to main PLL 435 (that provides the same functionality as main PLL 417).

During normal operations of radar system 400, leader radar device 410 is configured to generate and distribute the clock signals and LO signals that will control the operation of both leader radar device 410 and follower radar device 420 based upon an input signal received from XTAL 452. Because the signals that control the operation of radar system 400 are generated by leader radar device 410 during normal operations of radar system 400, various components of follower radar device 420 may be deactivated during normal operations. For example, when the control signals are being provided by leader radar device 410, XO circuit 436, clock phase controller 430, main PLL 435, XO operation detection circuit 438 and LO output 428 may each be disabled.

When leader radar device 410 fails, however, and the LO and clock signals are no longer being supplied to follower radar device 420, components of follower radar device 420 that were previously disabled may be enabled by the central processor 490 to allow proper operation of follower radar device 420 and operation of radar system 400. The radar system will operate in a degraded mode (no cascading, degraded resolution), but will continue to be fully functional.

As shown in FIG. 4, both leader radar device 410 and follower radar device 420 are connected to a central processor 490. Central processor 490 is configured to control the operation of leader radar device 410 and follower radar device 420. Additionally, central processor 490 is configured to detect a failure of leader radar device 410 (e.g., via receipt of an error flag signal from condition and control circuit 467) and, in the event of a failure, cause follower radar device 420 to enable components necessary for follower radar device 420 to operate independently of leader radar device 410.

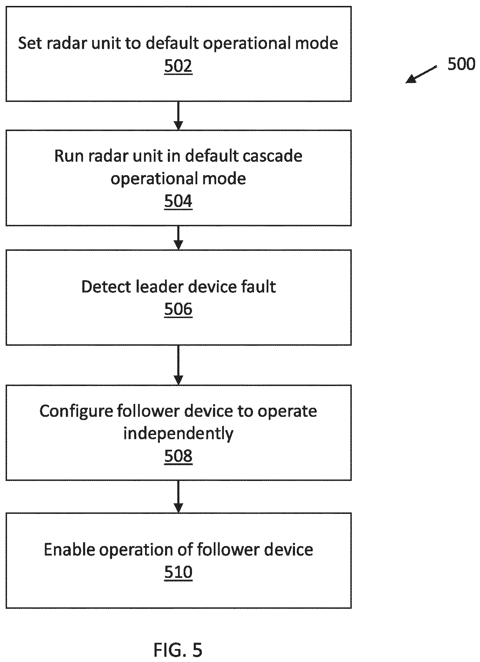

FIG. 5 is a flow chart depicting a method 500 that may be executed by processor 490 to implement fail-over in the event of a failure of leader radar device 410 of radar system 400. In a first step 502 (i.e., prior to failure), processor 490 is configured to set radar system 400 into a default mode of operation. In that mode, leader radar device 410 is configured to generate and transmit the LO and clock signals required for proper operation of leader radar device 410 and follower radar device 420. In that case (as illustrated in FIG. 4) the clock signal generation components (main PLL 435, clock phase controller 430, XO circuit 436, and XO operation detection circuit 438) and LO distribution components (i.e., LO output 428) of follower radar device 420 are disabled. With leader radar device 410 and follower radar device 420 so configured, in step 504 processor 490 causes radar system 400 to operate in this normal mode of operation.

Radar system 400 continues operating in this normal or default operational mode, until in step 506 central processor 490 detects a fault in leader radar device 410. The fault may be detected in any suitable manner. In a typical embodiment, the fault is detected by processor 490 upon receipt of a fault signal from flag condition and control circuit 467 that indicates leader radar device 410 has failed. In other embodiments, central processor 490 may directly inspect the registers of condition and control circuit 467 to detect a fault in leader radar device 410, receive a flag from XO operation detection circuit 465 that XO circuit 462 is non-operational or in an error state, or receive a flag from clock detection circuit 466 indicating that a clock signal is not being received at the clock input of clock distribution and synchronization circuit 460.

After detecting the leader radar device 410 fault, in step 508 processor 490 configures follower radar device 420 to operate independently of leader radar device 410. Specifically, processor 490 transmits control signals to follower radar device 420 via an SPI interface to cause follower radar device 420 to enable the operation of clock phase controller 430, XO circuit 436, XO operation detection circuit 438, and main PLL 435. With these components enabled, follower radar device 420 generates its own clock signals and LO signals enabling follower radar device 420 to transmit and receive radar signals. At the same time, central processor 490 may instruct main PLL 435 of follower radar device 420 to begin generating appropriate chirp signals for the transmission and reception/processing of radar signals. In some embodiments, central processor 490 may also disable certain components within leader radar device 410 to prevent leader radar device 410 from generating output signals that may interfere with the clock and LO signals that will now be generated by follower radar device 420. Specifically, central processor 490 may deactivate blocks inside leader device (e.g., clock distribution and synchronization circuit 460, main PLL 417, LO output port 418, etc.) thereby preventing failing leader radar device 410 from generating any clock or LO signals.

With leader radar device 410 and follower radar device 420 properly configured for independent operation of follower radar device 420, in step 510 processor 490 enables operation of follower radar device 420. As such, radar system 400 can continue operation, even in the event of a failure of leader radar device 410. Even so, the operation of radar system 400 may be somewhat degraded because only a single radar device (i.e., follower radar device 420) is operational, resulting in potentially reduced resolution and accuracy.

In the embodiment illustrated in FIGS. 3 and 4, the redundancy afforded by the present disclosure enables ongoing operations of a cascade radar systems follower radar device upon the failure of the system's leader radar device. Typically, in this operational mode, which may be referred to as a fallback mode or leader fault recovery mode, the leader radar device will be disabled and so will not contribute to the overall operation and performance of the radar system.

In some failure modes, however, the clock and LO signal generation components of the leader radar device may have failed, while the other components of the leader radar device (e.g., the radar signal transmitting and receiving components) may still be operational. For example, a failure in the crystal oscillator connected to the leader radar device would affect the ability of the leader radar device to generate clock and LO timing signals but would not affect the components of the leader radar device that are involved in the transmission and reception of radar signals.

Accordingly, in another embodiment of the present cascade radar system, additional electrical interconnections may be formed between the leader radar device and the follower radar device to enable the follower radar device, in the event of a leader radar device failure, to transmit a clock signal back to the leader radar device enabling operation of the leader radar device in a follower mode of operation.

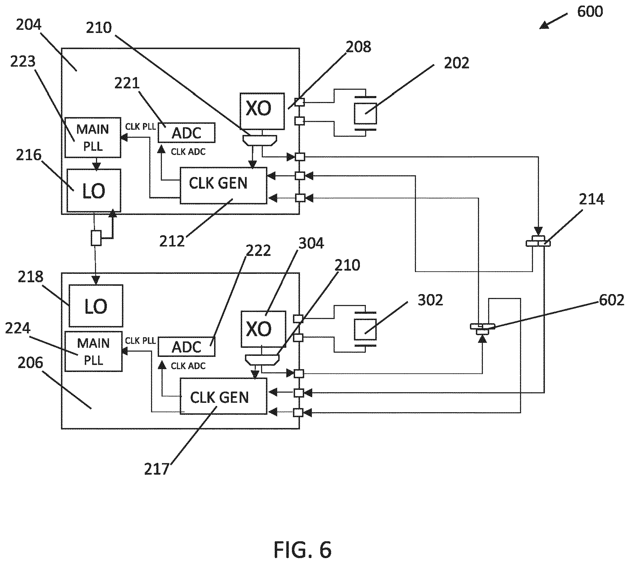

To illustrate, FIG. 6 is a functional block diagram depicting the cascade radar system of FIG. 3 modified to create a cascade radar system 600 that enables the follower radar device 206 to transmit a clock signal back to the leader radar device 204 in the event of a failure of the clock generation components of leader radar device 204. Components in FIG. 6 that have the same reference number as shown in FIG. 3 are functionally equivalent.

With reference to FIG. 6, in cascade radar system 600, in addition to splitter 214, which is used to distribute the clock signal generated by leader radar device leader radar device 204 to clock generation circuit 212 of leader radar device 204 and clock generation circuit 217 of 206, splitter 602 is connected between leader radar device 204 and follower radar device 206. Specifically, an input terminal of splitter 602 is connected to an output of XO circuit 304 of follower radar device 206. As such, when XO circuit 304 of follower radar device 206 is operational to generate an output signal based upon the input signal supplied by XTAL 302, that output signal is transmitted to splitter 602.

Splitter 602 splits the received signal into two separate signals with the same frequency and phase and supplies a first one of the two signals back to clock generation circuit 217 via a first routing path and a second one of the two signals to clock generation circuit 212 of leader radar device 204 via a second routing path. The two routing paths are of the same electrical length to provide that the two signals reach clock generation circuit 212 and clock generation circuit 217 with the same delay and phase.

In the event of a failure of clock generation circuit 212, XO circuit 208, or XTAL 202, such that leader radar device 204 can no longer generate the clock signals required for the operation of cascade radar system 600, follower radar device 206 can take over and generate the clock signals required for cascade radar system 600 operation using XTAL 302. Specifically, XO circuit 304 is enabled and generates an output clock signal based upon the signal received from XTAL 302. That clock signal is supplied through splitter 602 back to clock generation circuit 217 of follower radar device 206 enabling follower radar device 206 to operate as a radar device of cascade radar system 600. Additionally (and in contrast to the configuration of FIG. 3), the clock signal is also supplied, through splitter 602, to clock generation circuit 212 of leader radar device 204 enabling leader radar device 204 to continue operations as a radar device (i.e., transmitting and receiving radar signals) even though the clock signal generating components of leader radar device 204 (i.e., XO circuit 208, clock generation circuit 212) or XTAL 202 may have failed. In this embodiment, leader radar device 204 may utilize the clock signal received from splitter 602 generate clock signal inputs to ADC 222 and MainPLL 223, with MainPLL generating modulated signals to LO circuit 216. LO circuit 216, using the modulated signal inputs received from MainPLL 223, generates a frequency varying (in case of FMCW radar) LO signal that is transmitted to the LO circuit 218 of follower radar device 206. The LO signals are used to generate the high frequency signals that are ultimately transmitted by leader radar device 204 and follower radar device 206 as part of the operation of cascade radar system 600.

In this configuration, both the leader radar device 204 and follower radar device 206 can continue operations, however, their respective roles may be reversed. Accordingly, leader radar device 204 is operating as a follower radar device (i.e., relying on the clock signal received from follower radar device 206) and follower radar device 206 is operating as a leader radar device by supplying the clock signal through splitter 602.

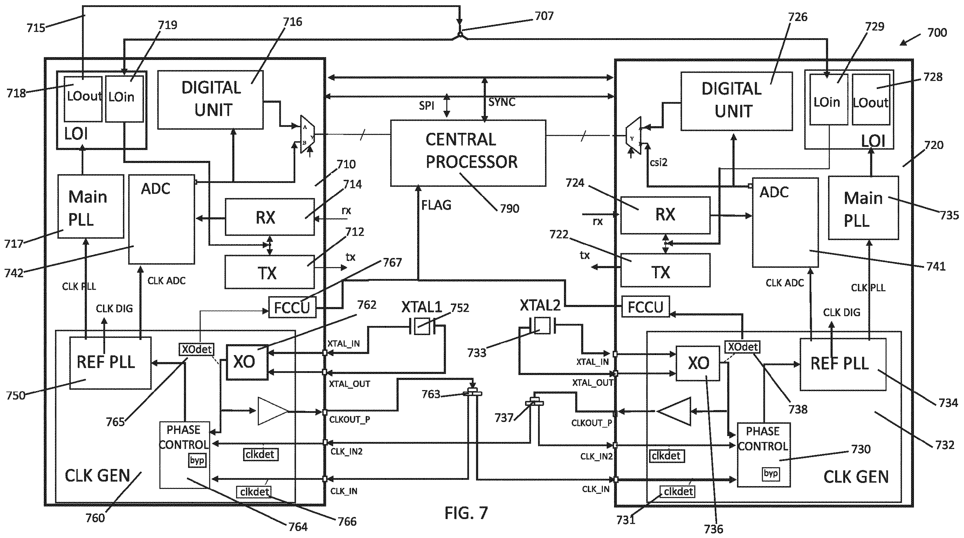

In more detail, FIG. 7 depicts an example block diagram of a radar system 700 having a cascade leader-follower architecture in which the follower radar device is configured to transmit a clock signal to the leader radar device in the event that a clock signal generation component of the leader radar device experiences a failure. In FIG. 7, radar system 700 includes a leader radar device 710 and one or multiple follower radar devices 720. One follower radar device 720 is shown in FIG. 7 for clarity purposes only, with the potential for other similar follower radar devices being implemented within radar system 700.

Leader radar device 710 and follower radar device 720 may be implemented using the same internal circuitry. Alternatively, the circuit and/or component examples depicted may be implemented as any number of separate integrated circuits, such that the functional components of leader radar device 710 and follower radar device 720 can be incorporated into multiple separate ICs that are interconnected with one other in a suitable manner.

Leader radar device 710 incorporates a radar transceiver formed by at least a frequency generation circuit, which in this example includes a reference PLL 750 and a main PLL 717. Main PLL 717 is configured to generate chirp signals used in constructing transmitted radar signals and for the processing of received radar signals.

An output from the main PLL 717 includes an LO signal that is transmitted to an LO interface that includes an LO output port 718 and an LO input port 719. The LO signal received from PLL 717 is output by LO output port 718 through LO output path 715. LO output path 715 is connected to RF splitter 707 that splits the LO signal into two separate in-phase signals of equal power and transmits the split LO signals to LO inputs 719, 729 at each of leader radar device 710 and follower leader radar device 720, respectively, via an equal transmission line length (e.g., via a star configuration). By using equal transmission line lengths, it is possible to provide equal delay and phase aligned signals for the LO signal received at each of leader radar device 710 and leader radar device 720.

Leader radar device 710 includes digital controller 716 and a transmitter circuit 712 comprising one to several transmitter channels (TX CH) and a receiver circuit 714 comprising one to several receiver channels (RX CH). Similarly, follower radar device 720 includes digital controller 726 and a transmitter circuit 722 comprising one to several transmitter channels (TX CH) and a receiver circuit 724 comprising one to several receiver channels (RX CH).

In a transmitter mode of operation of radar system 700, digital controller 716 in leader radar device 710 may cause a modulated transmit signal to be passed to transmitter circuits 712, 722 of the respective leader radar device 710 and follower radar device 720. Corresponding high-frequency outputs of the transmitter circuits 712, 722 are passed to power amplifiers, say, via a phase shifter circuit (both not shown), where the signals are amplified within the respective transmitter circuits 712, 722 and routed to the one or more transmitter antenna(e) (not shown).

In a receiver mode of operation of cascade radar system 700, a received radar signal may be received at the one or more receiver antenna(s) and passed to leader and follower receiver circuits 714, 724 that include a low noise amplifier (LNA) configured to amplify the received radar signal. The amplified received radar signal is mixed with the received high frequency LO signal received by leader radar device 710 and follower radar device 720 at respective LO input ports 719, 729.

To further process received radar signals, leader radar device 710 includes one or more programmable bandpass filter(s) and one or more gain amplifiers (not shown), as well as one or several analog-to-digital converters 742 that is/are coupled to receiver circuit 714. Similarly, follower radar device 720 includes one or more programmable bandpass filter(s) and one or more gain amplifiers (not shown), as well as one or several analog-to-digital converters 741 that is/are coupled to receiver circuit 724.

Leader radar device 710 includes a clock distribution and synchronization circuit 760. In this example, reference clock signals are generated by XO circuit 762 using an input signal XTAL_IN received from XTAL 752. The clock signal CLKOUT generated by XO circuit 762 is transmitted to splitter 763 that distributes the clock signal back to clock phase controller 764 of leader radar device 710. In this embodiment, follower radar device 720 also includes clock phase controller 730. The clock signal output by XO circuit 762 is also transmitted by splitter 763 to clock phase controller 730. In this embodiment, each of clock phase controller 764, 730 include bypass functionality enabling either of clock phase controller 764, 730 to be selectively disabled.

Synchronization circuit 760 includes XO operation detection circuit 765, which is configured to determine whether XO circuit 762 is generating an output clock signal, and clock detection circuit 766, which is configured to confirm that the clock signal CLKOUT is being properly received at clock phase controller 764. If either XO operation detection circuit 765 or clock detection circuit 766 determine that XO circuit 762 has malfunctioned or that the clock signal CLKOUT is not properly being received, either component can generate an error flag that is transmitted to fault collection and control circuit 767.

In the present embodiment, follower radar device 720 may be configurable to operate as a leader radar device in case of leader radar device 710 malfunction. Accordingly, follower radar device 720 may include the same functional components as leader radar device 710, however, during normal operations of radar system 700 those components may be disabled. For example, the LOI of follower radar device 720 includes LO output 728, which during normal operations is disabled. Additionally, follower radar device 720 includes clock distribution and synchronization circuit 732 that includes a reference PLL 734 configured, during normal operations, to receive the clock signal CLKOUT from XO circuit 762. Clock distribution and synchronization circuit 760 further includes XO circuit 736 (that provides the same functionality as XO circuit 762), clock phase controller 730 (that provides the same functionality as clock phase controller 764), XO operation detection circuit 738 (that provides the same functionality as XO operation detection circuit 765), clock detection circuit 731 (that provides the same functionality as clock detection circuit 766). XO circuit 736 of clock distribution and synchronization circuit 732 is connected to XTAL 733. XTAL 733 may provide the same functionality and be of similar physical configuration to XTAL 752. Reference PLL 734 is connected to main PLL 735 (that provides the same functionality as main PLL 717).

During normal operations of radar system 700, leader radar device 710 is configured to generate the clock signals and LO signals that will control the operation of both leader radar device 710 and follower radar device 720 based upon an input signal received from XTAL 752. Because the clock and timing signals that ensure the operation of radar system 700 are generated by leader radar device 710 during normal operations of radar system 700, various components of follower radar device 720 may be deactivated. For example, when those signals are being provided by leader radar device 710, XO circuit 736, clock phase controller 730, main PLL 735, and LO output 728 may each be disabled.

When leader radar device 710 fails, however, the LO and clock signals are no longer being supplied to follower radar device 720, components of follower radar device 720 that were previously disabled may be enabled to allow proper operation of follower radar device 720 and operation of radar system 700. And, furthermore, in the embodiment of FIG. 7, in this mode of operation, follower radar device 720 is configured to generate its own reference clock signal based upon an input signal received from XTAL 733 and communicate that clock signal back to leader radar device 710, via splitter 737. In that case, leader radar device 710 uses the clock signal received from follower radar device 720 to generate the LO signals that are then broadcast back to follower radar device 720 via LO output port 718. In this manner, if the clock signal generation components of leader radar device 710 experience a malfunction, follower radar device 720 can take over the role of generating the necessary clock signal for the operation of radar system 700 and can supply that clock signal back to leader radar device 710.

As shown in FIG. 7, both leader radar device 710 and follower radar device 720 are connected to a central processor 790. Central processor 790 is configured to control the operation of leader radar device 710 and follower radar device 720. Additionally, processor 790 is configured to detect a failure of leader radar device 710 (e.g., via receipt of an error flag signal from fault collection and control circuit 767) and, in the event of a failure, cause follower radar device 720 to enable components necessary for follower radar device 720 to generate an appropriate clock signal for the operation of radar system 700.

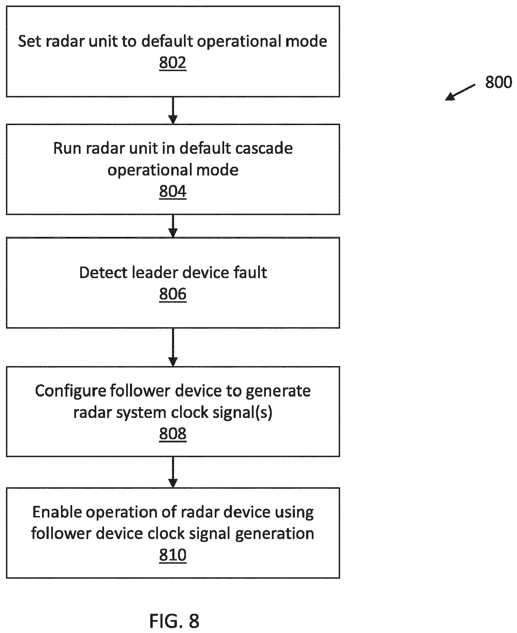

FIG. 8 is a flow chart depicting a method 800 that may be executed by central processor 790 to implement fail-over in the event of a failure of leader radar device 710 of radar system 700. In a first step 802 (i.e., prior to failure), central processor 790 is configured to set radar system 700 into a default mode of operation. In that mode, leader radar device 710 is configured to generate and transmit the LO and clock signals required for proper operation of leader radar device 710 and follower radar device 720. In that case, the clock signal generation components (main PLL 735, clock phase controller 730, XO circuit 736, and XO operation detection circuit 738) and LO distribution components (i.e., LO output 728) of follower radar device 720 are disabled. With leader radar device 710 and follower radar device 720 so configured, in step 804 central processor 790 causes radar system 700 to operate in this normal mode of operation.

Radar system 700 continues operating in this normal or default operational mode, until in step 806 central processor 790 detects a fault in leader radar device 710. The fault may be detected in any suitable manner. In a typical embodiment, the fault is detected by central processor 790 upon receipt of a fault signal from FCCU (Fault Collection and Control Circuit) 767 that indicates leader radar device 710 has failed. In other embodiments, central processor 790 may directly inspect the registers of FCCU 767 to detect a fault in leader radar device 710, receive a flag from XO operation detection circuit 765 that XO circuit 762 is non-operational or in an error state, or receive a flag from clock detection circuit 766 indicating that a clock signal is not being received at the clock input of synchronization circuit 760.

After detecting the leader radar device 710 fault, in step 808 central processor 790 configures follower radar device 720 to generate clock signals based upon its own XTAL 733. Specifically, central processor 790 transmits control signals to follower radar device 720 via an SPI interface to cause follower radar device 720 to enable the operation of clock phase controller 730, XO circuit 736, XO operation detection circuit 738, and main PLL 735. With these components enabled, follower radar device 720 generates its own clock signals. The clock signal generated by follower radar device 720 is transmitted to splitter 737 that distributes the clock signal back to clock phase controller 730 of follower radar device 720. The clock signal output by XO circuit 736 is also transmitted by splitter 737 to clock phase controller 764. Even though, in this situation where some of the clock generation components of leader radar device 710 have failed, leader radar device 710 may use the clock signal received from splitter 737 to continue operating as a leader radar device of radar system 700 by processing the received clock signal to generate appropriate timing signals (e.g., CLK ADCs clock, CLK PLL, LO signal) for operation of both leader radar device 710 and follower radar device 720 as part of radar system 700. Specifically, leader radar device 710 uses the clock signal received from splitter 737 (and follower radar device 720) to generate clock signals (ADC clock, MainPLL clock, and other internal clocks needed for correct operation of internal circuitry like digital clock signals) using appropriate components of clock synchronization circuit 760 and LO signals using, for example, ref PLL 750 that are transmitted through LO output port 718 back to the follower radar device 720.

At the same time, central processor 790 may disable certain components within leader radar device 710 to prevent leader radar device 710 from attempting to generate clock signals that may interfere with the clock signals that will now be generated by follower radar device 720. Specifically, central processor 790 may activate a control signal to inhibit the operation of XO circuit 762, thereby preventing leader radar device 710 from generating its own clock signals from this failing clock source or clock reference.

With leader radar device 710 and follower radar device 720 properly configured, in step 810 processor 790 enables operation of radar system 700. As such, even in the event of a failure in the clock generation components of leader radar device 710 (or XTAL 752), radar system 700 can continue operation with follower radar device 720 instead generating the necessary reference clock signal. In this mode of operation, leader radar device 710 continues to operate as the leader radar device of radar system 700 in that leader radar device 710 would continue to generate and distribute the LO signals used by follower radar device 720 to process the transmission and reception of radar signals through transmitter circuits 722 and receiver circuit 724, respectively.

In this configuration, however, where the reference clock signal is generated within follower radar device 720, the reference clock signal is used by leader radar device 710 to generate corresponding clock signals (e.g., the clock signals ADC clock, MainPLL clock) and LO signals that are, in turn, transmitted back to follower radar device 720. The passing of clock and LO signals back forth in this manner between leader radar device 710 and follower radar device 720 can result in some degradation in the performance of radar system 700. Specifically, the phase noise (PN) of leader radar device 710 may degraded as compared to normal operations due to the source of the clock signal for leader radar device 710 not being directly coming XTAL 752 but rather using the external connection (via CLK In) of split clock signal (from XTAL2 733 and splitter 737

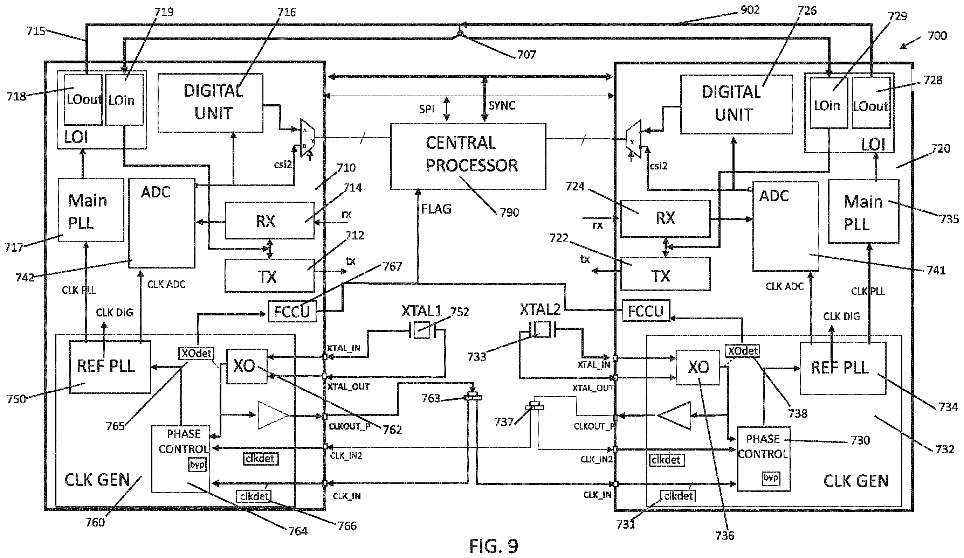

To mitigate this potential performance degradation, an embodiment of radar system 700 may be implemented in which, upon a failure of the clock generation components of leader radar device 710, the leader radar device 710 and follower radar device 720 swap roles, such that the follower radar device 720 can take over generation of both the clock signals of radar system 700 and the LO signals for signal processing, as depicted in FIG. 9.

Accordingly, FIG. 9 is a block diagram depicting an embodiment of radar system 700 that is configured to enable follower radar device 720 to distribute an LO signal to leader radar device 710. As shown in FIG. 9, electrical connection 902 is formed between LO output 728 of follower radar device 720 and RF splitter 707. Electrical connection 902 enables an LO signal generated by follower radar device 720 to be output by LO output 728 and transmitted through RF splitter 707 to both LO input port 719 of leader radar device 710 and LO input port 729 of follower radar device 720. In various embodiments, the electrical length of electrical connection 902 may be equal to the electrical length of the connection formed between LO output port 718 of leader radar device 710 and RF splitter 707.

When central processor 790 detects a fault in leader radar device 710 (e.g., via receipt of a fault signal or flag from fault collection and control circuit 767, XO operation detection circuit 765, and/or clock detection circuit 766), central processor 790 configures follower radar device 720 to generate clock and LO signals using its own XTAL 733 as its reference clock. Specifically, central processor 790 transmits control signals to follower radar device 720 via an SPI interface to cause follower radar device 720 to enable the operation of clock phase controller 730, XO circuit 736, XO operation detection circuit 738, main PLL 735, and LO output 728. With these components enabled, follower radar device 720 generates its own clock signals. The clock signal generated by follower radar device 720 is transmitted to splitter 737 that distributes the clock signal back to clock phase controller 730 of follower radar device 720. The clock signal output by XO circuit 736 is also transmitted by splitter 737 to clock phase controller 764 in the leader. Additionally, the LO signals generated by main PLL 735 are output by follower radar device 720 at LO output 728 and distributed through RF splitter 707 back to LO input port 719 of leader radar device 710 and LO input port 729 of follower radar device 720.

In this configuration, follower radar device 720 is now operating as the leader radar device of radar system 700 and is generating the clock and LO signals used by leader radar device 710 to process transmitted and received radar signals via transmitter circuits 712 and receiver circuit 714, respectively. As such, in this configuration, leader radar device 710 is operating as the follower radar device of 700.

In this configuration, central processor 790 may disable certain components within leader radar device 710 to prevent leader radar device 710 from attempting to generate reference clock or LO signals or other signals that may interfere with the clock and LO signals that will now be generated by follower radar device 720. Specifically, processor 790 may activate a control signal to prevent synchronization circuit 760 from generating its own reference clock signal. Similarly, central processor 790 may disable the operation of main PLL 717.

With leader radar device 710 and follower radar device 720 so configured, processor 790 can enable operation of radar system 700 with follower radar device 720 operating as the leader radar device and leader radar device 710 operating as the follower radar device. Because the roles of leader radar device 710 and follower radar device 720 have been reversed, radar system 700 in this configuration will not exhibit the degraded PN that may be associated with the embodiment of FIGS. 6 and 7, enabling higher performance of radar system 700 even in the event of a failure in leader radar device 710.

In an embodiment of the present disclosure, an automotive radar system includes a first crystal oscillator and a leader radar device electrically connected to the first crystal oscillator. The leader radar device including a first clock generation circuit that includes a first crystal-controlled clock oscillator unit configured to generate a first clock signal based upon a first input signal from the first crystal oscillator, a first local oscillator signal generator including a first phase locked loop circuit and local oscillator interface configured to generate a first local oscillator signal using the first clock signal, and first transmitters and receivers configured to transmit and receive first radar signals using the first local oscillator signal. The system includes a second crystal oscillator and a follower radar device electrically connected to the second crystal oscillator. The follower radar device is configured to receive the first clock signal and the first local oscillator signal from the leader radar device. The follower radar device includes a second clock generation circuit that includes a second crystal-controlled clock oscillator unit configured to generate a second clock signal based upon a second input signal from the second crystal oscillator, a second local oscillator signal generator including a second phase locked loop circuit configured to generate a second local oscillator signal using the second clock signal, and second transmitters and receivers configured to transmit and receive second radar signals using the second local oscillator signal and/or the first local oscillator signal received from the leader radar device. When the automotive radar system operates in a default mode the follower radar device is configured to bypass the second clock generation circuit so that an input signal to the second clock generation circuit is equal in phase to an output signal of the second clock generation circuit, and the follower radar device is configured to by the local oscillator signal generator so that an input signal to the second local oscillator signal generator is equal in phase to an output signal of the second local oscillator signal generator. The system includes a central processor configured to perform steps including detecting a fault in the leader radar device, causing the follower radar device to enable operation of the second clock generation circuit to generate the second clock signal, causing the follower radar device to enable operation of the second local oscillator signal generator, and causing the follower radar device to transmit and receive radar signals using the second local oscillator signal.

Another embodiment includes a radar system, including: a leader radar device, including: a first clock generation circuit configured to generate a first clock signal, and a first transmitter and receiver configured to transmit and receive radar signals using a first local oscillator signal; a follower radar device, wherein the follower radar device is configured to receive the first clock signal and the first local oscillator signal from the leader radar device, the follower radar device including: a second clock generation circuit configured to generate a second clock signal, wherein, in a default operational mode of the radar system at least a portion of the second clock generation circuit is disabled, and a second transmitter and receiver configured to transmit and receive first radar signals.

Another embodiment includes a method, including: detecting a fault in a clock signal generation component of a leader radar device of a cascaded-configuration automotive radar system, wherein the automotive radar system includes a follower radar device and the leader radar device is configured to generate a first clock signal and distribute the first clock signal to the follower radar device; causing the follower radar device to generate a second clock signal, causing the follower radar device to enable operation of a local oscillator signal generator configured to generate a local oscillator signal using the second clock signal, and causing the follower radar device to transmit and receive radar signals using the second local oscillator signal Embodiments of the present disclosure may include features recited in the following numbered clauses:
1. An automotive radar system, comprising:
   a first crystal oscillator;
   a leader radar device electrically connected to the first crystal oscillator, the leader radar device including:
      a first clock generation circuit, including a first crystal-controlled clock oscillator unit configured to generate a first clock signal based upon a first input signal from the first crystal oscillator,
      a first local oscillator signal generator including a first phase locked loop circuit and local oscillator interface configured to generate a first local oscillator signal using the first clock signal, and
      first transmitters and receivers configured to transmit and receive first radar signals using the first local oscillator signal;
      a second crystal oscillator;
      a follower radar device electrically connected to the second crystal oscillator, wherein the follower radar device is configured to receive the first clock signal and the first local oscillator signal from the leader radar device, the follower radar device including:
         a second clock generation circuit, including a second crystal-controlled clock oscillator unit configured to generate a second clock signal based upon a second input signal from the second crystal oscillator,
         a second local oscillator signal generator including a second phase locked loop circuit configured to generate a second local oscillator signal using the second clock signal, and
         second transmitters and receivers configured to transmit and receive second radar signals using the second local oscillator signal and/or the first local oscillator signal received from the leader radar device, wherein, when the automotive radar system operates in a default mode:
            the follower radar device is configured to bypass the second clock generation circuit so that an input signal to the second clock generation circuit is equal in phase to an output signal of the second clock generation circuit, and
            the follower radar device is configured to by the local oscillator signal generator so that an input signal to the second local oscillator signal generator is equal in phase to an output signal of the second local oscillator signal generator; and
            a central processor, configured to perform steps including:
               detecting a fault in the leader radar device,
               causing the follower radar device to enable operation of the second clock generation circuit to generate the second clock signal,
               causing the follower radar device to enable operation of the second local oscillator signal generator, and
               causing the follower radar device to transmit and receive radar signals using the second local oscillator signal.
2. The automotive radar system of clause 1, wherein, after detecting the fault in the leader radar device, the central processor is further configured to perform the step of bypassing at least a portion of the first crystal-controlled clock oscillator unit and wherein the follower radar device is configured to transmit the second clock signal to the leader radar device to enable the leader radar device to continue operating using the second clock signal.
3. The automotive radar system of clause 1, wherein the leader radar device includes a fault collection and control circuit that is connected to the first clock generation unit and the processor is configured to perform the step of detecting the fault in the leader radar device by receiving a flag signal from the fault collection and control circuit.
4. The automotive radar system of clause 1, further comprising a first signal splitter including a first input terminal configured to receive the first clock signal from the first clock generation circuit, a first output terminal electrically connected to the first clock generation circuit and a second output terminal electrically connected to the second clock generation circuit.
5. The automotive radar system of clause 4, further comprising a second signal splitter including a first input terminal configured to receive the second clock signal from the second clock generation circuit, a first output terminal electrically connected to the first clock generation circuit and a second output terminal electrically connected to the second clock generation circuit.
6. The automotive radar system of clause 1, further comprising a splitter including:
   an input terminal electrically connected to the first local oscillator signal generator by a first transmission line and to the second local oscillator signal generator by a second transmission line;
   a first output terminal electrically connected to a first local oscillator signal input of the leader radar device by a third transmission line; and
   a second output terminal electrically connected to a second local oscillator signal input of the follower radar device by a fourth transmission line.
7. The automotive radar system of clause 6, wherein a first electrical length of the third transmission line is equal to a second electrical length of the fourth transmission line.
8. The automotive radar system of clause 7, wherein a third electrical length of the first transmission line is equal to a fourth electrical length of the second transmission line.
9. A radar system, comprising:
   a leader radar device, including:
   a first clock generation circuit configured to generate a first clock signal, and
   a first transmitter and receiver configured to transmit and receive radar signals using a first local oscillator signal;
   a follower radar device, wherein the follower radar device is configured to receive the first clock signal and the first local oscillator signal from the leader radar device, the follower radar device including:
      a second clock generation circuit configured to generate a second clock signal, wherein, in a default operational mode of the radar system at least a portion of the second clock generation circuit is disabled, and
      a second transmitter and receiver configured to transmit and receive first radar signals.
10. The radar system of clause 9, further comprising:
   a central processor electrically connected to the leader radar device and the follower radar device, the central processor being configured to perform steps including:
   detecting a fault in the leader radar device,
   causing the follower radar device to enable operation of the second clock generation circuit to generate the second clock signal, and
   causing the follower radar device to transmit and receive second radar signals using the second local oscillator signal.
11. The radar system of clause 10, wherein, after detecting the fault in the leader radar device, the central processor is further configured to perform the step of disabling at least a portion of the first clock generation circuit in the leader radar device.
12. The radar system of clause 11, wherein the follower radar device is configured to transmit the second clock signal to the leader radar device.
13. The radar system of clause 9, further comprising a first signal splitter including a first input terminal configured to receive the first clock signal from the leader radar device, a first output terminal electrically connected to a first local oscillator signal generator in the leader radar device and a second output terminal electrically connected to a second local oscillator signal generator in the follower radar device.
14. The radar system of clause 13, further comprising a second signal splitter including a first input terminal configured to receive the second clock signal from the follower radar device, a first output terminal electrically connected to the first local oscillator signal generator and a second output terminal electrically connected to the second local oscillator signal generator.
15. The radar system of clause 14, further comprising a splitter including:
   an input terminal electrically connected to the first local oscillator signal generator by a first transmission line and to the second local oscillator signal generator by a second transmission line;
   a first output terminal electrically connected to a first local oscillator signal input of the leader radar device by a third transmission line; and
   a second output terminal electrically connected to a second local oscillator signal input of the follower radar device by a fourth transmission line.
16. The radar system of clause 15, wherein a first electrical length of the third transmission line is equal to a first electrical length of the fourth transmission line.
17. A method, comprising:
   detecting a fault in a clock signal generation component of a leader radar device of a cascaded-configuration automotive radar system, wherein the automotive radar system includes a follower radar device and the leader radar device is configured to generate a first clock signal and
   distribute the first clock signal to the follower radar device;
   causing the follower radar device to generate a second clock signal,
   causing the follower radar device to enable operation of a local oscillator signal generator configured to generate a local oscillator signal using the second clock signal, and
   causing the follower radar device to transmit and receive radar signals using the second local oscillator signal.
18. The method of clause 17, further comprising, after detecting the fault in the clock signal generation component of the leader radar device, preventing the leader radar device from generating the first clock signal.
19. The method of clause 17, further comprising causing the follower radar device to transmit the second clock signal to the leader radar device, and wherein the leader radar device is configured to use the second clock signal to transmit and receive second radar signals.
20. The method of clause 17, the leader radar device includes a fault condition and control circuit that is connected to a first local oscillator signal generator and further comprising detecting the fault in the leader radar device by receiving a flag signal from the fault condition and control circuit.

Although the examples have been described with reference to automotive radar systems, the systems and methods described herein may be implemented in conjunction with other types of radar systems.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depicts one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. An automotive radar system, comprising:
a first crystal oscillator;
a leader radar device electrically connected to the first crystal oscillator, the leader radar device including:
a first clock generation circuit, including a first crystal-controlled clock oscillator unit configured to generate a first clock signal based upon a first input signal from the first crystal oscillator,
a first local oscillator signal generator including a first phase locked loop circuit and local oscillator interface configured to generate a first local oscillator signal using the first clock signal, and
first transmitters and receivers configured to transmit and receive first radar signals using the first local oscillator signal;
a second crystal oscillator;
a follower radar device electrically connected to the second crystal oscillator, wherein the follower radar device is configured to receive the first clock signal and the first local oscillator signal from the leader radar device, the follower radar device including:
a second clock generation circuit, including a second crystal-controlled clock oscillator unit configured to generate a second clock signal based upon a second input signal from the second crystal oscillator,
a second local oscillator signal generator including a second phase locked loop circuit configured to generate a second local oscillator signal using the second clock signal, and
second transmitters and receivers configured to transmit and receive second radar signals using the second local oscillator signal and/or the first local oscillator signal received from the leader radar device, wherein, when the automotive radar system operates in a default mode:
the follower radar device is configured to bypass the second clock generation circuit so that an input signal to the second clock generation circuit is equal in phase to an output signal of the second clock generation circuit, and
the follower radar device is configured to by the local oscillator signal generator so that an input signal to the second local oscillator signal generator is equal in phase to an output signal of the second local oscillator signal generator; and
a central processor, configured to perform steps including:
detecting a fault in the leader radar device,
causing the follower radar device to enable operation of the second clock generation circuit to generate the second clock signal,
causing the follower radar device to enable operation of the second local oscillator signal generator, and
causing the follower radar device to transmit and receive radar signals using the second local oscillator signal.

2. The automotive radar system of claim 1, wherein, after detecting the fault in the leader radar device, the central processor is further configured to perform the step of bypassing at least a portion of the first crystal-controlled clock oscillator unit and wherein the follower radar device is configured to transmit the second clock signal to the leader radar device to enable the leader radar device to continue operating using the second clock signal.

3. The automotive radar system of any of claims 1 to 2, wherein the leader radar device includes a fault collection and control circuit that is connected to the first clock generation unit and the processor is configured to perform the step of detecting the fault in the leader radar device by receiving a flag signal from the fault collection and control circuit.

4. The automotive radar system of any of claims 1 to 3, further comprising a first signal splitter including a first input terminal configured to receive the first clock signal from the first clock generation circuit, a first output terminal electrically connected to the first clock generation circuit and a second output terminal electrically connected to the second clock generation circuit.

5. The automotive radar system of claim 4, further comprising a second signal splitter including a first input terminal configured to receive the second clock signal from the second clock generation circuit, a first output terminal electrically connected to the first clock generation circuit and a second output terminal electrically connected to the second clock generation circuit.

6. The automotive radar system of any of claims 1 to 3, further comprising a splitter including:
an input terminal electrically connected to the first local oscillator signal generator by a first transmission line and to the second local oscillator signal generator by a second transmission line;
a first output terminal electrically connected to a first local oscillator signal input of the leader radar device by a third transmission line; and
a second output terminal electrically connected to a second local oscillator signal input of the follower radar device by a fourth transmission line.

7. The automotive radar system of claim 6, wherein a first electrical length of the third transmission line is equal to a second electrical length of the fourth transmission line.

8. The automotive radar system of claim 7, wherein a third electrical length of the first transmission line is equal to a fourth electrical length of the second transmission line.

9. A radar system, comprising:
a leader radar device, including:
a first clock generation circuit configured to generate a first clock signal, and
a first transmitter and receiver configured to transmit and receive radar signals using a first local oscillator signal;
a follower radar device, wherein the follower radar device is configured to receive the first clock signal and the first local oscillator signal from the leader radar device, the follower radar device including:
a second clock generation circuit configured to generate a second clock signal, wherein, in a default operational mode of the radar system at least a portion of the second clock generation circuit is disabled, and
a second transmitter and receiver configured to transmit and receive first radar signals.

10. The radar system of claim 9, further comprising:
a central processor electrically connected to the leader radar device and the follower radar device, the central processor being configured to perform steps including:
detecting a fault in the leader radar device,
causing the follower radar device to enable operation of the second clock generation circuit to generate the second clock signal, and
causing the follower radar device to transmit and receive second radar signals using the second local oscillator signal.

11. The radar system of claim 10, wherein, after detecting the fault in the leader radar device, the central processor is further configured to perform the step of disabling at least a portion of the first clock generation circuit in the leader radar device.

12. The radar system of claim 11, wherein the follower radar device is configured to transmit the second clock signal to the leader radar device.

13. The radar system of any of claims 9 to 12, further comprising a first signal splitter including a first input terminal configured to receive the first clock signal from the leader radar device, a first output terminal electrically connected to a first local oscillator signal generator in the leader radar device and a second output terminal electrically connected to a second local oscillator signal generator in the follower radar device.

14. The radar system of claim 13, further comprising a second signal splitter including a first input terminal configured to receive the second clock signal from the follower radar device, a first output terminal electrically connected to the first local oscillator signal generator and a second output terminal electrically connected to the second local oscillator signal generator.

15. A method, comprising:
detecting a fault in a clock signal generation component of a leader radar device of a cascaded-configuration automotive radar system, wherein the automotive radar system includes a follower radar device and the leader radar device is configured to generate a first clock signal and distribute the first clock signal to the follower radar device;
causing the follower radar device to generate a second clock signal,
causing the follower radar device to enable operation of a local oscillator signal generator configured to generate a local oscillator signal using the second clock signal, and
causing the follower radar device to transmit and receive radar signals using the second local oscillator signal.
